# EUROPEAN PATENT APPLICATION

(11) **EP 1 821 526 A2**
(43) Date of publication of application: **22.08.2007**
(21) Application number: 07002640.6
(22) Date of filing: 07.02.2007
(51) Int. Cl.: H04N 5/44

(54) **Terminal and data control server for processing broadcasting program information and method using the same**

(30) Priority: 16.02.2006 KR 20060015171
(71) Applicant: LG Electronics Inc., Yongdungpo-Gu Seoul 150-010 (KR)
(72) Inventor: An, Young Ki, Kumchon-gu Seoul, 153-801 (KR)
(74) Representative: Katérle, Axel

(57) **Abstract**

A terminal for processing broadcasting program information. The terminal includes a receiving unit configured to receive a program for broadcasting a sports event and positional data of players participating in the sports event, a control unit configured to output a control signal for instructing a player layout to be generated using the received positional data, a layout generating unit configured to convert the positional data into position display data on the player layout and generate the player layout using the position display data based on the control signal of the control unit, and a display unit configured to display the generated player layout.

## Description

This application claims the priority benefit of Korean Patent Application No. 10-2006-0015171, filed on February 16, 2006, which is hereby incorporated by reference in its entirety.

### BACKGROUND OF THE INVENTION

### Field of the Invention

The present invention relates to a terminal, and more particularly to a terminal, a data control server and corresponding method for processing broadcasting program information.

### Discussion of the Related Art

According to related art, a terminal receives data from a data broadcasting server, a video signal from an MPEG-4 broadcasting server, and an audio signal from an audio encoder using a digital multimedia broadcasting (hereinafter, referred to as "DMB") system. In more detail, the data broadcasting server transmits the data to a multiplexer via a program associated data (PAD) or non-program associated data (NPAD) multiplexer.

Further, the MPEG-4 broadcasting server transmits the video signal to the multiplexer via the NPAD multiplexer, and the audio encoder directly transmits the audio signal to the multiplexer. Then, the multiplexer multiplexes the received data, video signal and audio signal to form a single signal.

Also, the terminal receives the generated signal from the multiplexer and divides the received signal into the original data, video signal and audio signal. Therefore, the terminal can provide the user with a variety of digital broadcasting programs based on the divided original data, video signal and audio signal.

However, the related art terminal can not receive positional information of players participating in a sporting even using a broadcasting system or mobile network. Therefore, the user can not see a player layout indicating the positions of the players who participate in the sports event.

### SUMMARY OF THE INVENTION

Accordingly, one object of the present invention is to address the above-noted and other problems.

Another object of the present invention is to provide a data control server, mobile terminal and a corresponding method that generates and displays positional data of players participating in a sports event and a player layout based on the positional data to users.

Another object of the present invention is to provide a terminal and a corresponding method that efficiently displays a player layout indicating the positions of players who participate in a sports event.

To achieve these objects and other advantages and in accordance with the purpose of the invention, as embodied and broadly described herein, the present invention provides in one aspect a terminal for processing broadcasting program information. The terminal includes a receiving unit configured to receive a program for broadcasting a sports event and positional data of players participating in the sports event, a control unit configured to output a control signal for instructing a player layout to be generated using the received positional data, a layout generating unit configured to convert the positional data into position display data on the player layout and generate the player layout using the position display data based on the control signal of the control unit, and a display unit configured to display the generated player layout. The present invention also provides a corresponding method for processing broadcast program information.

In another aspect, the present invention provides a terminal for processing broadcasting program information. The terminal includes a receiving unit configured to receive a program for broadcasting a sports event and a player layout on which positions of the players participating in the sports event are displayed, a display unit configured to display information, and a control unit configured to control the display unit to display the received player layout with the received sports event program.

In yet another aspect, the present invention provides a data control server for processing broadcasting program information. The data control server includes a positional data generating unit configured to generate positional data of players participating in a sports event, for a program for broadcasting the sports event, which is transmitted to a terminal, a layout generating unit configured to generate a player layout using the generated positional data, a transmitting unit configured to transmit at least one of the generated positional data and the player layout to the terminal, and a control unit configured to control the transmitting unit to transmit at least one of the generated positional data and the player layout to the terminal.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram showing a terminal for processing broadcasting program information according to a first embodiment of the present invention;

FIG. 2 is a flowchart illustrating a method for processing broadcasting program information according to the first embodiment of the present invention;

FIG. 3 is a block diagram showing a terminal for processing broadcasting program information according to a second embodiment of the present invention;

FIG. 4 is a flowchart illustrating a method for processing broadcasting program information according to the second embodiment of the present invention;

FIG. 5 is a front view showing a first embodiment of a display unit for displaying a player layout according to the present invention;

FIG. 6 is a front view showing a second embodiment of the display unit for displaying the player layout according to the present invention;

FIG. 7 is a flowchart illustrating an embodiment of a method for displaying player information on a player layout according to the present invention;

FIG. 8 is a block diagram showing an embodiment of a data control server for processing broadcasting program information according to the present invention; and

FIG. 9 is a flowchart showing an embodiment of a method for processing broadcasting program information in the data control server according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

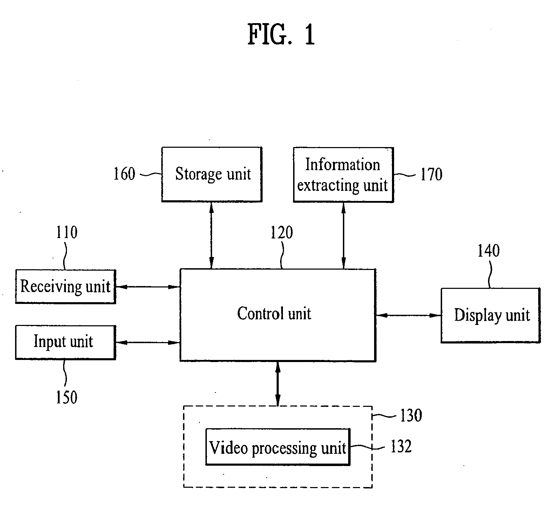

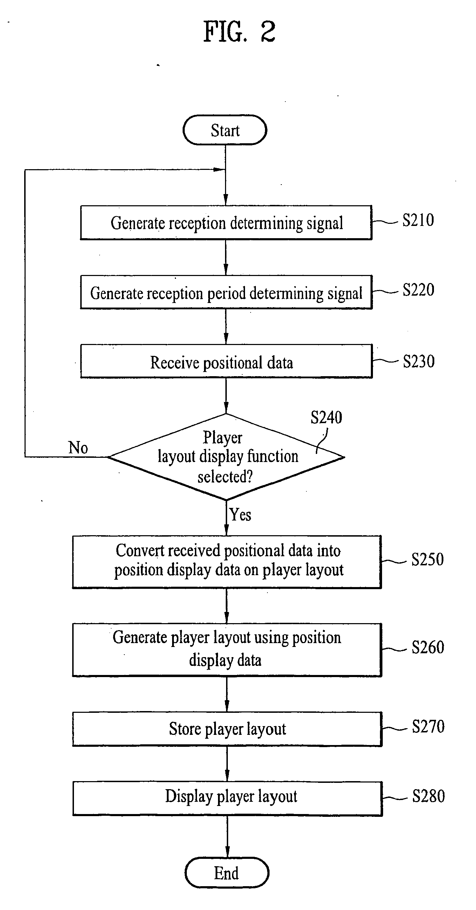

Referring to FIGs. 1 and 2, a terminal for processing broadcasting program information and a corresponding method according to an embodiment of the present invention will now be described in detail.

As shown in FIG. 1, the terminal includes a receiving unit 110 configured to receive a program for broadcasting a sports event and positional data of players who participate in the sports event, a control unit 120 configured to output a control signal which instructs a player layout to be generated, a layout generating unit 130 configured to generate the player layout using the received positional data, and a display unit 140 configured to display the generated player layout. The terminal also includes an input unit 150 configured to generate a reception determining signal and a reception period determining signal of the positional data, and a storage unit 160 configured to store information on the players and the generated player layout.

Therefore, as shown in FIG. 2, when the receiving unit 110 receives the program for broadcasting the sports event, the user generates via the input unit 150 a signal (hereinafter, referred to as the reception determining signal) for determining whether or not the positional data of players who participate in the sports event is received (S210). That is, the user can use the input unit 150 to request the positional data. Further, the user may also always want the positional data to be received and displayed when viewing a sporting event. In this instance, the user can set a default value using the input unit 150 to always receive the positional data. That is, the input unit 150 automatically generates the reception determining signal when a particular event/program is received.

In addition, the user also generates via the input unit 150 a signal (hereinafter, referred to as the "reception period determining signal") for identifying a reception period of the positional data (S220). For example, when a plurality of reception periods are set in the terminal, the user can select one of the reception periods via the input unit 150 so as to generate the reception period determining signal. Further, the reception period indicates, for example, the number of receptions of the positional data in a single sports event, a first half or second half of the sports event, etc. Also, the reception period may be set at a default value using the input unit 150.

Then, as shown, the positional data is broadcasted to the terminal and received by the receiving unit 110 (S230). That is, the receiving unit 110 may receive the positional data using a digital broadcasting network or a mobile network. For example, when the digital broadcasting network is a DMB network, the receiving unit 110 may receive the positional data using a data service. At this time, the receiving unit 110 receives the positional data via a broadcasting channel of the DMB network.

In addition, the receiving unit 110 receives the positional data based on at least one of the reception determining signal and the reception period determining signal. For example, the receiving unit 110 may receive the positional data only when the reception determining signal is generated, or may receive the positional data at a specific reception period which is set based on the reception period determining signal.

Further, when the reception period determining signal is not generated, the receiving unit 110 may receive the positional data based on a transmission period which is set in a server for transmitting the positional data. Also, the positional data includes at least one of coordinate information indicating the positions of the players, team identification information of the players and player identification information of the players.

For example, when a sports field is set as the entire plane, the center of the sports field is set to the origin, a horizontal direction of the sports field is set to the X axis, and a vertical direction of the sports field is set to the Y axis, the coordinate information of the positional data indicates coordinate values indicating the positions of the players according to the set coordinate system.

In addition, the positional data includes a video for displaying actual positions of the players who participate in the sports event on the field. For example, the positional data may be a video obtained by photographing the entire sports field in the unit of a screen such that the positions of the players on the photographed actual sports field can be viewed.

Returning to FIG. 2, the control unit 120 then determines whether or not a player layout display function is selected (S240). When the control unit 120 determines the player layout display function is selected (Yes in S240), the control unit 120 outputs the control signal for instructing the player layout to be generated using the positional data.

For example, the player layout display function may be selected by the user, or may be set as a default layout display. Then, the layout generating unit 130 converts the positional data into position display data on the player layout based on the control signal of the control unit 120 (S250). In addition, because the position display data corresponds to the received positional data, the position display data includes the coordinate information indicating the positions of the players, the team identification information of the players, and the player identification information of the players, all of which are included in the received positional data.

For example, when the sports field of the player layout is set as the above example to X and Y axes, the coordinate information of the position display data indicates coordinate values obtained by converting the coordinate information of the positional data according to the set coordinate system. For example, the layout generating unit 130 may convert a coordinate value (2, 3) of the positional data into a coordinate value (2, 3) on the display unit.

Further, the layout generating unit 130 can previously recognize the range of the X-Y coordinate values of the coordinate system in which the actual entire sports field is set to the entire plane. Accordingly, in this example, the layout generating unit 130 equalizes the range of the X-Y coordinate value of the sports field of the player layout with that of the actual entire sports field.

That is, the sports field of the player layout can be obtained by reducing the actual sports field in a predetermined ratio, and the range of the coordinate value is previously determined by a data server for generating the positional data and the terminal. Thus, when the X coordinate value of the actual sports field is in the range of -100 to 100 and the Y coordinate value thereof is in the range of -50 to 50, the layout generating unit 130 sets the range of the X-Y coordinate value of the sports field of the player layout to be equal to that of the actual sports field.

In addition, as shown in FIG. 1, the layout generating unit 130 includes a video processing unit 132 for separating respective object videos corresponding to the players based on the actual sports field from the video for displaying the positions of all players participating in the sports event. Accordingly, the layout generating unit 130 may convert the positional data corresponding to the object videos into the position display data by separating the respective object videos corresponding to the players from the video. For example, the position display data may include at least one of the positional information of the players on the actual sports field, information on a distance between the players, the team identification information of the players, and the player identification information of the players.

Next, as shown in FIG. 2, the layout generating unit 130 generates the player layout using the position display data (S260). That is, the layout generating unit 130 generates the player layout on which the positions of the players are displayed based on the coordinate values of the position display data. Alternatively, the layout generating unit 130 may generate the player layout using the position display data based on the separated object videos.

For example, if the sports event is soccer, the layout generating unit 130 may generate the player layout on which the positions of the players are displayed by displaying the positions of the players on the coordinate system, in which the sports field of the player layout is set as the entire plane, using the coordinate values of the' position display data. Further, the layout generating unit 130 generates and displays on the player layout at least one of team identification marks of the players or player identification marks using the team or player identification information.

For example, the layout generating unit 130 may generate the player layout including the team identification marks of the players by allocating specific shapes or specific colors as the team identification marks. The layout generating unit 130 may also generate the player layout including the player identification marks by allocating specific shapes, specific colors, specific numbers or specific symbols as the player identification marks.

Next, in FIG. 2, the storage unit 160 stores the generated player layout (S270). Further, the storage unit 160 stores the player layout so as to generate a variety of event information. For example, the variety of event information includes information such as a main offensive direction of each team, a ball possession percentage of each position, the change of the positions of the players in the event, and the respective main positions of the players.

Then, the display unit 140 displays the generated player layout (S280). For example, the display unit 140 displays the player layout using an on screen display (hereinafter, referred to as "OSD") scheme. The OSD scheme allows the display unit 140 to directly display information required by the user on a screen. Accordingly, the display unit 140 may display a video of the program for broadcasting the sports event on the screen and display the generated player layout to overlap the video of the program for broadcasting the sports event using the OSD scheme.

Further, in one example, the display unit 140 displays the player layout using an overlay scheme. That is, the overlay scheme corresponds to the player layout overlapping the video of the program. In addition, the display unit 140 may display the player layout to overlap the video of the program for broadcasting the sports event by adjusting the transparency of the player layout.

That is, the display unit 140 may divide the player layout into a background part and a player part, and adjust only the transparency of the background part or the transparency of the entire player layout. The display unit 140 may adjust the transparency of the player layout using an alpha blending method. That is, an alpha value in the alpha blending method indicates a transparency degree.

Also, the display unit 140 displays the player layout at a specific position of the display unit 140. For example, when a user sets a specific position for displaying the player layout, the display unit 140 displays the player layout at the specific position set by the user. Alternatively, when the position for displaying the player layout on the display unit 140 is set as a default, the display unit 140 displays the player layout at the position set as the default without an operation by the user.

Further, the display unit 140 displays the player layout in a predetermined size. For example, when the specific size is set by the user or is set as a default, the display unit 140 displays the player layout in the set specific size. In addition, the display unit 140 can divide the screen of the display unit 140 into a plurality of areas and displays the player layout on any of the plurality of areas. For example, the display unit 140 may display the player layout in an area selected by the user or an area set as a default among the plurality of areas.

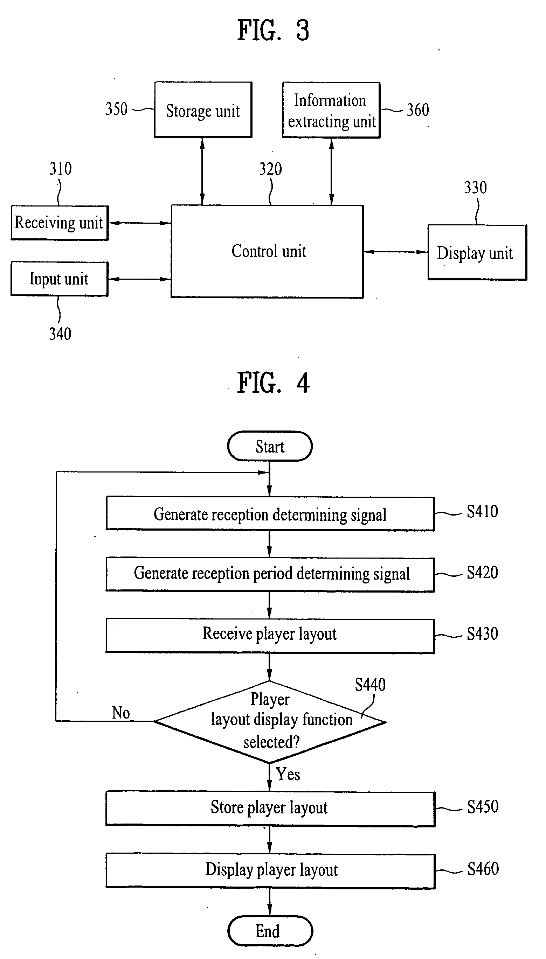

Next, referring to FIGs. 3 and 4, a terminal for processing broadcasting program information and corresponding method according to another embodiment of the present invention will be described in detail. As shown in FIG. 3, the terminal includes a receiving unit 310 configured to receive a player layout on which positions of players who participate in a sports event are displayed, a display unit 330 configured to display the received player layout, and a control unit 320 configured to control the display unit 330.

The terminal also include an input unit 340 configured to generates a reception determining signal and a reception period determining signal, a storage unit 350 configured to store information on the players and the generated player layout and an information extracting unit 360 configured to extract information on a specific player from the storage unit 350.

As shown in FIG. 4, when the receiving unit 310 receives a program for broadcasting a sports event, the user can use the input unit 340 to generate the reception determining signal (which requests the player layout be provided) (S410). Note that the generating step (S410) is the same as the generating step (S210) shown in FIG. 2. Therefore, the description of the generating step (S410) will be omitted.

Next, in FIG. 4, the input unit 340 generates the reception period determining signal which identifies a reception period of the player layout (S420), and the receiving unit 310 receives the player layout (5430). Similar to above, the generating step (S420) and the receiving step (S430) are the same as the generating step (S220) and the receiving step (S230), respectively, in FIG. 2 and thus these description of the steps will be omitted.

In addition, the receiving unit 310 receives the player layout based on at least one of the reception determining signal and the reception period determining signal. Also, the receiving unit 310 may periodically receive the player layout. For example, the reception period determining signal may. indicate to periodically receive the player layout (e.g., once every half hour, twice per half of the game, etc.). Alternatively, the terminal may be set as a default to periodically receive the player layout independent of the reception period determining signal.

Next in FIG. 4, the control unit 320 determines whether or not a player layout display function is selected (S440). When the control unit 320 determines the player layout display function is selected (Yes in S440), the control unit 320 controls the storage unit 350 to store the received player layout. For example, the player layout display function may be selected by the user, or may be set as default value.

The storage unit 350 then stores the received player layout (S450), and the display unit 330 displays the stored player layout (S460). In addition, as discussed above, the player layout indicates a drawing in which the positions of the players participating in the sports event are displayed based on positional information of the players on an actual sports field, team identification information of the players and player identification information of the players.

Further, the display unit 330 displays the player layout including the positions of the players, the team identification marks or the player identification marks on the player layout corresponding to the position of the actual sports field. For example, the display unit 330 can display the player layout using the OSD scheme or the overlay scheme.

In addition, the display unit 330 displays a video of a program for broadcasting the sports event on the screen and displays the received player layout to overlap the video of the program for broadcasting the sports event using the OSD scheme. Alternatively, the display unit 330 may display the player layout using the overlay scheme for generating a video in which the player layout overlaps the video of the program for broadcasting the sports event and displaying the generated video.

The display unit 330 may also display the player layout to overlap the video of the program for broadcasting the sports event by adjusting the transparency of the player layout using the alpha blending method. Also, the display unit 330 may display the player layout at a specific position of the display unit 330.

Accordingly, when a user sets a specific position for displaying the player layout, the display unit 330 displays the player layout at the specific position set by the user. When the position for displaying the player layout on the display unit 330 is set as a default, the display unit 330 displays the player layout at the position set as the default without an operation of the user. The display unit 330 also displays the player layout in a predetermined size. Accordingly, when the specific size is set by the user or is set as a default, the display unit 330 displays the player layout in the set specific size.

Further, the display unit 330 can divide the screen of the display unit 330 into a plurality of areas and display the player layout on any of the plurality of areas. Accordingly, the display unit 330 may display the player layout in an area selected by the user or an area set as a default among the plurality of areas.

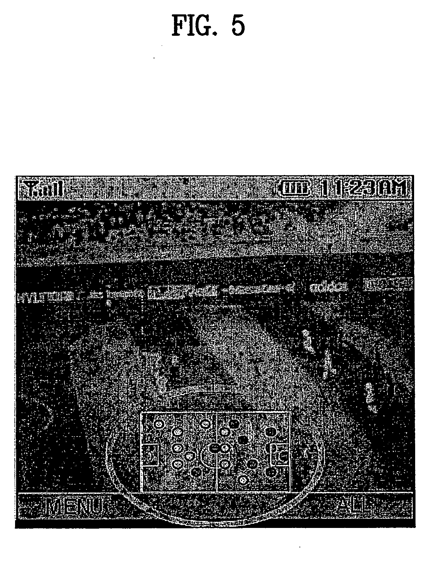

Referring next to FIG. 5, which is a front view showing the display unit 140 and 330 for displaying the player layout according to a first embodiment of the present invention. As shown in FIG. 5, the display unit 140 and 330 displays the player layout to overlap the video of the program for broadcasting a sports event which is currently being received using the OSD scheme.

That is, the display unit 140 and 330 adjusts the transparency of the player layout using the alpha blending process. Further, the player layout may be displayed at any position of the display unit 140 and 330 according to the selection of the user. Also, when a position for displaying the player layout is set as a default, the display unit 140 and 330 displays the player layout at the position set as the default.

In FIG. 5, the player layout is set at the bottom center portion of the display. The player layout may also be set at the left or right lower corners, etc. In addition, as shown in FIG. 5, the display unit 140 and 330 displays the positions of the players on the actual sports field. Thus, FIG. 5 illustrates players on both teams being at the position where they are on the actual field.

The display unit also displays the player layout including the team identification marks or the player identification marks. For example, when the position of any player is displayed, the display unit 140 and 330 may display the player layout including the position of the player on the actual sports field, the team identification mark and the player identification mark.

When the number of the teams which participate in the sports event is two, the display unit 140 and 330 may display one team with a first color (e.g., a white color) and the other team with a second color (e.g., a black color). FIG. 5 illustrates two soccer teams with one team players being displayed with white circles and the other team players being displayed with black circles. The display unit 140 and 330 also displays the boundaries of the field, scoring areas, etc.

The display unit 140 and 330 may also display the players who participate in the sports event with at least one of a specific shape, a specific color, a specific number and a specific symbol as the player identification marks. In the example of FIG. 5, circles are used to identify the different players. Further, the display unit 140 and 330 in FIG. 5 displays the player layout using the transparency method.

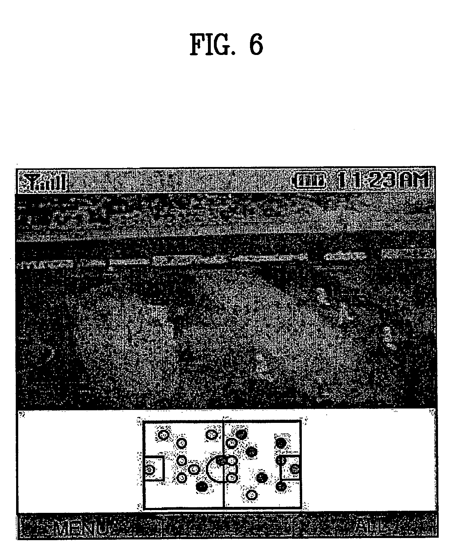

Referring to FIG. 6, another embodiment of the display unit 140 and 330 for displaying the player layout according to the present invention will now be described in detail. In this example, the display unit 140 and 330 divides the screen into a plurality of areas and displays the player layout in any one of the plurality of areas.

That is, the user of the terminal may select an area division number or an area division direction, or then select an area for displaying the player layout from the plurality of areas. Also, the display unit may divide the screen into the plurality of areas in a horizontal direction and display the player layout in an area corresponding to a row selected from the plurality of areas. In this instance, the number of the selected rows is at least one.

For example, when the selected area division number is 16 and the selected area is a sixteenth area, the display unit 140 and 330 divides the screen into sixteen areas and displays the player layout in the sixteenth area of the 16 areas. Alternatively, the display unit 140 and 330 may divide the screen into the plurality of areas in a vertical direction and display the player layout in an area corresponding to a column selected from the plurality of areas. Again, the number of the selected columns is at least one.

Thus, FIG. 6 illustrates the player layout being displayed in a user-selected area (or a default area) and thus is not displayed using the transparency method as in FIG. 5. Further, the players are shown as white circles for one team and black circles for the other team. However, any color, shape, etc. may be used.

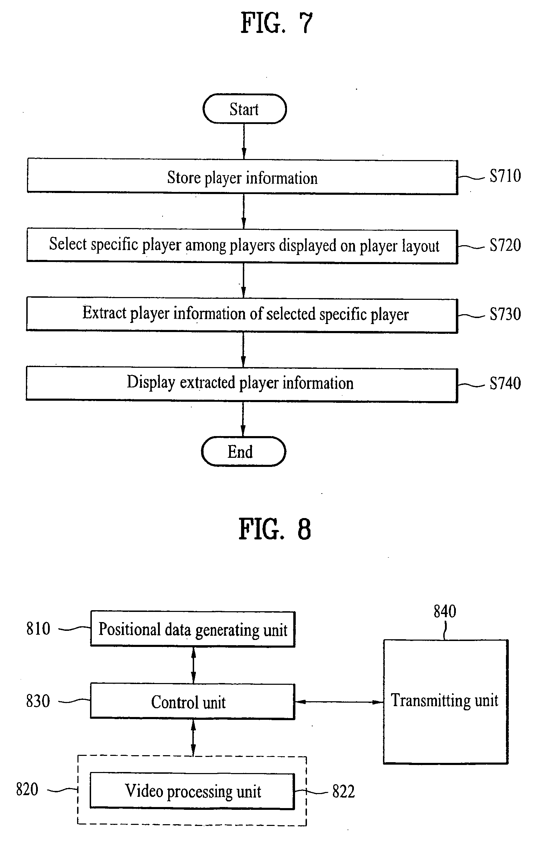

Turning next to FIG. 7, which is a flowchart illustrating a method for displaying information on the players on the player layout according an embodiment of the present invention. The elements in FIGs. 1 and 3 will also be referred to in this description.

As shown in FIG. 7, the storage units 160 and 350 store information (hereinafter, referred to as "player information") on the players who participate in the sports event (S710). That is, when receiving a program for broadcasting a sports event, the terminal receives and stores the player information of the players from a broadcasting server or the data control server that transmits the program.

Thus, when the sports event is, for example, soccer, the player information may include a player name, a team name, a main position of the player, a goal success rate of the player, a ball possession percentage of the player and a contribution of the player. As shown in FIG. 7, a specific player can be selected from the players displayed on the player layout (S720). That is, a specific player may be selected by the user using a key button provided with the terminal.

For example, when unique numbers are allocated to the players, the user may a select a particular player by selecting the corresponding number of the player on a keypad. A specific player may also be selected from the displayed players using a directional key provided with the terminal. Further, when the display units 140 and 330 are, for example, touch screens, the user may simply touch a particular player on the player layout to select the particular player.

Then, the information extracting units 170 and 360 extract the player information of the selected specific player from the storage units 160 and 350 (S730), and the display units 140 and 330 display the extracted player information (S740). For example, the display units 140 and 330 can divide the screen into the plurality of areas and display the player information in any of the divided areas. Alternatively, the display units 140 and 330 may display the player information to overlap the player layout.

Turning next to FIGs. 8, which is a block diagram of a data control server for processing broadcasting program information according to an embodiment of the present invention.

As shown in FIG. 8, the data control server includes a positional data generating unit 810 configured to generate positional data, a layout generating unit 820 configured to generate a player layout using the generated positional data, a transmitting unit 840 configured to transmit at least one of the generated positional data and the player layout to a terminal, and a control unit 830 configured to control the above-mentioned components. The layout generating unit 820 also includes a video processing unit 822.

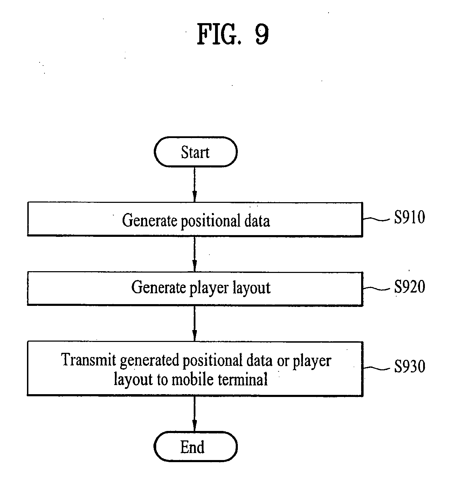

Next, FIG. 9 is a flowchart illustrating a method for processing broadcasting information in the data control server. FIG. 8 will also be referred to in this description. As shown in FIG. 9, the positional data generating unit 810 generates positional data of the players who participate in the sports event that is broadcasted to the terminal (S910).

As discussed above, the positional data includes at least one of coordinate information indicating the positions of the players, team identification information of the players and player identification information. Next in FIG. 9, the layout generating unit 820 generates the player layout using the generated positional data (S920). The player layout information was also discussed in detail above, and thus is not repeated here.

In addition, the layout generating unit 820 shown in FIG. 8 includes the video processing unit 822 for separating object videos corresponding to the players from the video for displaying the positions of all the players who participate in the sports event. Accordingly, the layout generating unit 820 may generate the player layout including the positions of the players on the player layout corresponding to the actual sports field, a distance between the players, the team identification information of the players, and the player identification information of the players.

Then, the transmitting unit 840 transmits at least one of the generated positional data and the player layout to the terminal (S930). Further, the transmitting unit 840 transmits the player layout to the terminal using at least one of a digital broadcasting network and a mobile network.

In addition, the present invention is applicable to all terminals having a function for receiving and displaying a broadcasting program. The present invention is, for example, applicable to a digital television set or a desktop personal computer as well as a mobile terminal such as a cellular phone, a notebook personal computer or a personal digital assistant.

Therefore, the present invention makes it possible to generate positional data of players who participate in a sports event or a player layout according to the positional data, for a program for broadcasting a sports event, which is transmitted to a terminal. Further, it is also possible to transmit the generated positional data or the player layout to the terminal using a digital broadcasting network or a mobile network.

In addition, according to the present invention, it is possible to receive the positional data of the players who participate in the sports event and to generate the player layout using the received positional data, when the sports event is broadcast and received by the terminal. The generated positional data or the received player layout may also be generated using a variety of schemes.

Further, because specific player information can be extracted by the selection of a user, it is possible to provide information on the players to the user. It is also possible to recognize the motion of a player, who is not photographed by a camera, using the generated player layout.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A terminal for processing broadcasting program information, the terminal comprising:
a receiving unit configured to receive a program for broadcasting a sports event and positional data of players participating in the sports event;
a control unit configured to output a control signal for instructing a player layout to be generated using the received positional data;
a layout generating unit configured to convert the positional data into position display data on the player layout and generate the player layout using the position display data based on the control signal of the control unit; and
a display unit configured to display the generated player layout.

2. The terminal of claim 1, further comprising:
an input unit configured to generate at least one of a reception determining signal for requesting .the positional data be received at the terminal and a reception period determining signal for identifying a reception period to receive the positional data.

3. The terminal of claim 2, wherein the receiving unit receives the positional data based on the reception determining signal generated by the input unit.

4. The terminal of claim 1, wherein the receiving unit periodically receives the positional data.

5. The terminal of claim 1, wherein the positional data includes at least one of coordinate information indicating positions of the players, team identification information of the players and player identification information of the players.

6. The terminal of claim 1, wherein, when the positional data is a video for displaying positions of all players participating in the sports event based on an actual sports field, the layout generating unit includes a video processing unit configured to separate object videos from the video corresponding to the players.

7. The terminal of claim 6, wherein the position display data includes at least one of positions of the players on the actual sports field, a distance between the players, team identification information of the players and player identification information of the players based on the separated object videos.

8. The terminal of claim 1, wherein the display unit displays the player layout using at least one of an on screen display (OSD) scheme and an overlay scheme.

9. The terminal of claim 1, wherein the display unit divides a screen into a plurality of areas and displays the player layout in any of the plurality of areas.

10. The terminal of claim 1, further comprising:
a storage unit configured to store information on the players participating in the sports event and the generated player layout.

11. The terminal of claim 10, further comprising:
an information extracting unit configured to extract information on a specific player from the storage unit when the specific player is selected from the players displayed on the player layout.

12. The terminal of claim 11, wherein, when the display unit is a touch screen, the information extracting unit extracts information on a specific player from the storage unit when the specific player is touched among the players displayed on the player layout.

13. A terminal for processing broadcasting program information, the terminal comprising:
a receiving unit configured to receive a program for broadcasting a sports event and a player layout on which positions of the players participating in the sports event are displayed;
a display unit configured to display information; and
a control unit configured to control the display unit to display the received player layout with the received sports event program.

14. A data control server for processing broadcasting program information, the data control server comprising:
a positional data generating unit configured to generate positional data of players participating in a sports event, for a program for broadcasting the sports event, which is transmitted to a terminal;
a layout generating unit configured to generate a player layout using the generated positional data;
a transmitting unit configured to transmit at least one of the generated positional data and the player layout to the terminal; and
a control unit configured to control the transmitting unit to transmit at least one of the generated data and the player layout to the terminal.

15. A method for processing broadcasting program information, the method comprising:
receiving a program for broadcasting a sports event and positional data of players participating in the sports event;
outputting a control signal for instructing a player layout be generated using the received positional data;
converting the received positional data into position display data on the player layout and generating the player layout using the position display data based on the output control signal; and
displaying the generated player layout.

16. The method of claim 15, further comprising:
generating at least one of a reception determining signal for requesting the positional data be received at the terminal and a reception period determining signal for identifying a reception period to receive the positional data.

17. The method of claim 16, wherein the receiving step receives the positional data based on the reception determining signal generated by the generating step.

18. The method of claim 15, wherein the receiving step periodically receives the positional data.

19. The method of claim 15, wherein the positional data includes at least one of coordinate information indicating positions of the players, team identification information of the players and player identification information of the players.

20. The method of claim 15, wherein, when the positional data is a video for displaying positions of all players participating in the sports event based on an actual sports field, the generating step separates object videos from the video corresponding to the players.

21. The method of claim 20, wherein the position display data includes at least one of positions of the players on the actual sports field, a distance between the players, team identification information of the players and player identification information of the players based on the separated object videos.

22. The method of claim 15, wherein the displaying step displays the player layout using at least one of an on screen display (OSD) scheme and an overlay scheme.

23. The method of claim 15, wherein the displaying step divides a screen into a plurality of areas and displays the player layout in any of the plurality of areas.

24. The method of claim 15, further comprising:
storing information on the players participating in the sports event and the generated player layout.

25. The method of claim 24, further comprising:
extracting information on a specific player from the stored information when the specific player is selected from the players displayed on the player layout.

26. The method of claim 25, wherein, when the display unit is a touch screen, the extracting step extracts information on a specific player from the stored information when the specific player is touched among the players displayed on the player layout.

27. A method for processing broadcasting program information, the method comprising:
receiving a program for broadcasting a sports event and a player layout on which positions of the players participating in the sports event are displayed to a terminal; and
displaying on a display unit of the terminal the received player layout with the received sports event program.

28. A method for processing broadcasting program information on a data control server, the method comprising:
generating positional data of players participating in a sports event, for a program for broadcasting the sports event, which is to be transmitted to a terminal;
generating a player layout using the generated positional data; and
transmitting at least one of the generated positional data and the player layout to the terminal.
